# EUROPÄISCHE PATENTANMELDUNG

(11) **EP 2 913 262 A1**
(43) Veröffentlichungstag der Anmeldung: **02.09.2015**
(21) Anmeldenummer: 15000495.0
(22) Anmeldetag: 20.02.2015
(51) Int. Cl.: B62M 9/10, B62M 9/136

(54) **Einrichtung zum Umlegen der Kette an einem vorderen Kettenrad für ein Fahrrad**

(30) Priorität: 27.02.2014 DE 202014001791 U
(71) Anmelder: SRAM Deutschland GmbH, 97424 Schweinfurt (DE)
(72) Erfinder: Braun, Michael, 97456 Dittelbrunn (DE); Auer, Marcus, 97525 Schwebheim (DE); Engel, Markus, 97421 Schweinfurt (DE)

(57) **Zusammenfassung**

Die Erfindung betrifft eine Einrichtung zum Umlegen der Kette an einem vorderen Kettenrad für ein Fahrrad, umfassend ein kleineres Kettenrad (26), ein größeres Kettenrad (27), eine Rollenkette (28) sowie einen Kettenumwerfer (17) mit einem Kanal (23) an einer inneren Kettenführungsplatte (2), wobei der Kanal (23) an der inneren Kettenführungsplatte (2) eine Erhebung (24) aufweist, der im Zustand des beginnenden Umlegens der Rollenkette (28) vom kleineren Kettenrad (26) auf das benachbarte größere Kettenrad (27) zur Deckung kommt mit einem Kettensteigniet (31) am größeren Kettenrad, bei Betrachtung in einer Richtung parallel zur Drehachse der Kettenräder (26, 27). Die Gestaltung des Kanals (23) mit einer Erhebung an einer inneren Führungsplatte ergibt im Zusammenwirken der Rollenkette mit den Kettensteignieten und Selektionsrippen an den jeweils größeren vorderen Kettenrädern an der Tretkurbel bessere Bedingungen beim Umlegen der Rollenkette vom kleineren Kettenrad auf das größere Kettenrad.

## Beschreibung

Die vorliegende Erfindung betrifft eine Einrichtung zum Umlegen der Rollenkette an einem vorderen Kettenrad für ein Fahrrad, umfassend ein kleineres Kettenrad, ein größeres Kettenrad, eine Rollenkette sowie einen Kettenumwerfer mit einem Kanal an einer inneren Führungsplatte zum Führen der Rollenkette während des Kettenumlegens.

Der vordere Kettenumwerfer eines Fahrrades befördert die Kette von einem der abgestuften vorderen Kettenblätter auf ein benachbartes anderes Kettenblatt zum Zweck des Gangumschaltens. Dieser Umwerfvorgang wird von einer im Wesentlichen quer zur Kettenlaufrichtung verlaufenden Schaltbewegung des Kettenführungselementes eingeleitet. Der Umwerfvorgang kann in beiden Richtungen von einem großen oder mittleren Kettenblatt auf das nächst kleinere und von einem kleinen oder mittleren Kettenblatt auf das nächst größere erfolgen. Dabei läuft die Kette zwischen einer rahmenseitigen, inneren und einer äußeren Führungsplatte des Kettenführungselementes und wird entsprechend der gewünschten Schaltrichtung entweder von der inneren oder äußeren Führungsplatte auf das benachbarte Kettenblatt befördert. Diese Führungsplatten verfügen an der zur Kette gerichteten Seite über eine auf die jeweiligen Umwerfvorgänge angepasste Kontur.

Vordere Kettenumwerfer gibt es sowohl für Zweifach-, als auch für Dreifach-Kettenrad-Anordnungen, mit entsprechender Gestaltung des jeweiligen Kettenführungselementes, das mit der Kette zusammenarbeitet und nicht mit den Kettenblättern und der Tretkurbel kollidieren darf.

Die Kette streift beim Schaltvorgang von einem größeren auf ein kleineres Kettenblatt und in der Gegenrichtung an der Führungsfläche entlang und wird von dieser auf ein benachbartes Kettenblatt umgelegt. Am Beginn dieses Umlegevorganges übt die jeweilige Führungsplatte eine Kraft auf die Kette aus und lenkt sie zum benachbarten Kettenblatt. Da es sich dabei um den unter einer Kettenzugskraft befindlichen Zugtrum der Kette handelt, der ausgelenkt wird, müssen die Führungsplatten entsprechend stabil ausgebildet sein. Die zwischen den Führungsplatten vorhandenen Verbindungselemente in Gestalt eines oberen Distanzsteges, eines hinteren Distanzsteges sowie einer vorderen Plattenverbindung erhöhen die Stabilität der Führungsplatten.

Die Erfindung ist sowohl auf die Gestaltung der inneren Führungsplatte gerichtet, als auch auf die mit der inneren Führungsplatte zusammenwirkenden vorderen Kettenräder an der Tretkurbel. Es sollen bessere Bedingungen beim Umlegen der Rollenkette von einem kleineren Kettenrad auf ein benachbartes, größeres Kettenrad erreicht werden.

Dieser Umlegevorgang ist generell dadurch erschwert, dass der beim Umlegen beteiligte Abschnitt der Rollenkette den Zugtrum des Rollenkettenantriebes darstellt, mit dem Zugkräfte zwischen einem vorderen Kettenrad und einem hinteren Ritzel am Hinterrad übertragen werden. Unter der Wirkung dieser Zugkräfte hat die Rollenkette die Tendenz, einen geradlinigen Verlauf anzunehmen. Im Gegensatz dazu bedingt der Umlegevorgang, dass die Rollenkette mit den Zähnen an dem Kettenrad, auf das die Kette umgelegt werden soll, in Eingriff gelangen kann und dazu einen abgeknickten Verlauf haben muss.

Zur Realisierung eines Vorganges zum Umlegen der Kette sind verschiedene Lösungsansätze verfolgt worden. In der EP 0 474 139 greift ein hakenförmiges Teil an dem Kettenrad, auf das die Rollenkette umgelegt werden soll, zwischen ein Paar von Kettenlaschen ein und befördert die Kette auf ein größeres radiales Niveau. Hierbei ist ein Kompromiss dahingehend zu finden, dass das hakenförmige Teil einerseits möglichst weit in axialer Richtung vom Kettenrad vorstehen soll, um sicher zwischen ein Paar von Kettenlaschen einzugreifen, während andererseits ein zu weit vorstehendes hakenförmiges Teil in Kontakt mit der schräg zum Kettenrad hin laufenden Rollenkette kommen kann und störende Geräusche erzeugt und das hakenförmige Teil außerdem auch noch verschleißt. Aus der EP 0 538 780 ist eine Lösung bekannt, bei der zwei Kettensteigniete beim Umlegevorgang nacheinander mit der Rollenkette in Kontakt kommen, dabei die entsprechenden Kettenglieder auf ein höheres radiales Niveau bringen und den direkten Eingriff zwischen einem Zahn am größeren Kettenrad und einem Glied der Rollenkette vorbereiten. Da die Kette bei diesem Umlegevorgang am ersten Kettensteigniet leicht abknickt, nimmt sie einen abgeknickten Verlauf ein, wodurch die gesamte Länge der beteiligten Kettenglieder größer ist, als der direkte geradlinige Abstand hin zu dem mit der Rollenkette in Eingriff kommenden Zahn am größeren Kettenrad. Damit kann verhindert werden, dass ein unsicherer Eingriffsvorgang zwischen einem Paar von Innenlaschen der Rollenkette und dem Zahn des Kettenrades stattfindet und danach trotzdem die Kette wieder außer Eingriff gerät, was eine erhöhte Belastung für die Rollenkette bedeuten würde. Vielmehr wird erzielt, dass immer nur ein Eingriff von einem Paar von Außenlaschen der Rollenkette mit dem Zahn des Kettenrades stattfindet und ein Eingriff von einem Paar von Innenlaschen der Rollenkette mit dem Zahn des Kettenrades sicher vermieden wird.

Aus der EP 1 609 713 sind Schaltunterstützungsvorsprünge bekannt, die selektiv nur an Außenlaschen angreifen, während sie Kettenglieder mit Innenlaschen passieren lassen, ohne mit diesen in Kontakt zu kommen.

Die Erfindung macht es sich zur Aufgabe, mit wenigen Mitteln zum Kettenumlegen auszukommen und trotzdem einen sicheren Vorgang zum Kettenumlegen zu realisieren. Dazu wird die innere Führungsplatte des Kettenführungselementes entsprechend gestaltet und an der zur äußeren Führungsplatte weisenden Seite mit einem Kanal zur Aufnahme der sich relativ zum Kettenführungselement bewegenden Rollenkette ausgestattet, wie an sich schon vorbekannt aus der US 4,551,121 und der EP 1 602 572.

Zusätzlich weist der Kanal entlang seiner Längserstreckung eine Erhebung auf, die den senkrechten Abstand zwischen den beiden Führungsplatten reduziert, unter Ausbildung einer Engstelle. Die Position der Erhebung ist daraufhin abgestimmt, dass die Erhebung bei der fortschreitenden Drehbewegung des Kettenrades mit einem am größeren Kettenrad angeordneten Steigniet zusammentrifft. In einer Richtung parallel zur Drehachse der Kettenräder betrachtet, kommen zum Zeitpunkt des beginnenden Eingriffs des Steigniets zwischen Außenlaschen der Rollenkette der Steigniet, ein Rollenkettenglied und die Erhebung zur Deckung. Der Steigniet befördert die Rollenkette auf ein größeres radiales Niveau und trägt zu einem sicheren Eingriff der Rollenkette an einem in der Richtung der Erstreckung der Rollenkette folgenden Zahn am größeren Kettenrad bei.

Die geometrischen Verhältnisse werden daraufhin abgestimmt, dass in zusammengebautem Zustand von Kettenumwerfer, Kettenrad und Rollenkette zum Zeitpunkt des beginnenden Kettenumlegens der Abstand zwischen der Erhebung am Kettenführungselement und einem Zahn am kleineren Kettenrad in der Nachbarschaft zu dem tangential das kleinere Kettenrad verlassenden Rollenkette einem ganzzahligen Vielfachen der Kettenteilung entspricht.

Bei einer Weiterbildung der Erfindung wird zusätzlich noch eine Selektionsrippe am größeren Kettenrad angeordnet, die mit den Gliedern der Rollenkette zusammenwirkt.

Beim Anliegen eines Innenlaschengliedes an der Selektionsrippe gelangt die Selektionsrippe zwischen die in Erstreckungsrichtung der Rollenkette benachbarten Enden von Außenlaschen. Dann kann sich die Kette maximal an das benachbarte größere Kettenrad annähern, und es kommt zum Eingriff der Rollenkette am Kettensteigniet.

In der alternativen Konstellation reitet eine Außenlasche der Kette auf der Selektionsrippe auf und verhindert die maximale Annäherung der Rollenkette an das benachbarte größere Kettenrad. Folglich kommt es dazu, dass die Erhebung eine Innenlasche nicht weit genug in axialer Richtung hin zum Steigniet drücken kann, um dieses Innenlaschenglied in Kontakt mit dem Steigniet zu bringen. Andererseits wird in der entgegengesetzten Konstellation der Eingriff der Rollenkette am Kettensteigniet noch sicherer verhindert, als ohne die Anwesenheit einer Selektionsrippe.

Das bevorzugte Ausführungsbeispiel der Erfindung wird im Folgenden auf der Grundlage von bildlichen Darstellungen erläutert.

Die Figur 1 zeigt eine perspektivische Ansicht eines erfindungsgemäßen Kettenführungselementes für einen vorderen Kettenwerfer eines Fahrrades.

In Figur 2 ist das Kettenführungselement aus Figur 1 gezeigt, bei Betrachtungsrichtung von der äußeren Führungsplatte zur inneren Führungsplatte.

In Figur 3 ist das Kettenführungselement aus Figur 1 gezeigt, bei Betrachtungsrichtung von der vorderen Plattenverbindung zum oberen Distanzsteg.

Figur 4 zeigt Details des Kettenführungselements aus Figur 1 im Bereich der vorderen Plattenverbindung ohne Niet.

Figur 5 zeigt Details des Kettenführungselements aus Figur 1 im Bereich der vorderen Plattenverbindung mit Niet.

Figur 6 zeigt einen Kettenumwerfer der erfindungsgemäßen Einrichtung zum Umlegen der Rollenkette an einem vorderen Kettenrad für ein Fahrrad in perspektivischer Darstellung, bei Betrachtung von schräg vorn.

Figur 7 zeigt den Kettenumwerfer aus Figur 6 in einer Explosionsdarstellung.

Figur 8 zeigt die erfindungsgemäße Einrichtung zum Umlegen der Rollenkette an einem vorderen Kettenrad für ein Fahrrad, wobei das vordere Kettenrad und die Rollenkette nur schematisch dargestellt sind.

Figur 9 zeigt das vordere Kettenrad der erfindungsgemäßen Einrichtung zum Umlegen der Rollenkette sowie das benachbarte kleinere Kettenrad, betrachtet achsparallel zur Drehachse der Kettenräder.

Figur 10 zeigt die Situation zum Zeitpunkt am Beginn des Kettenumlegens an einer erfindungsgemäßen Einrichtung zum Umlegen der Rollenkette.

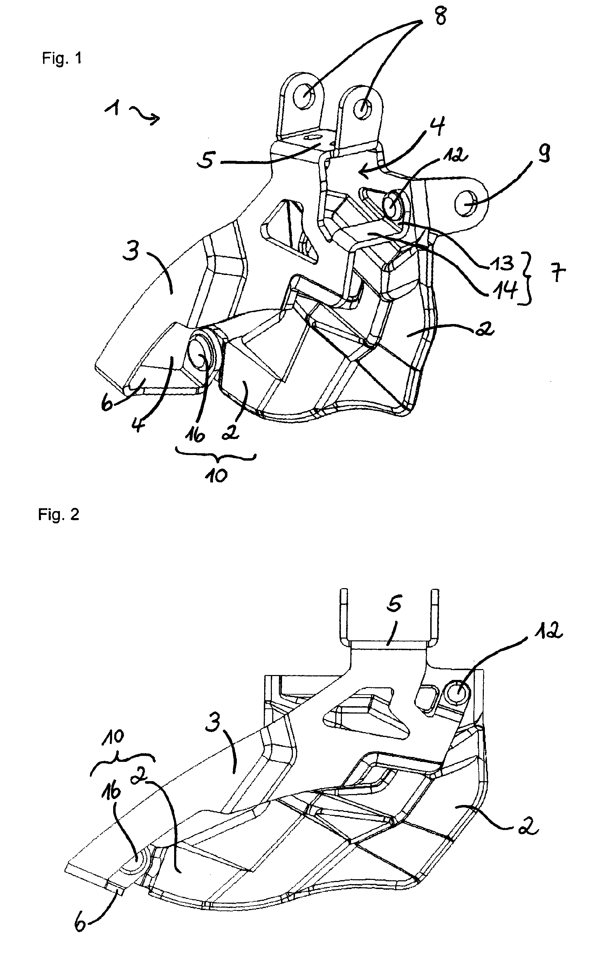

In den Figuren 1 bis 3 ist ein Kettenführungselement (1) für einen vorderen Kettenumwerfer eines Fahrrades in verschiedenen Ansichten dargestellt. Es sind eine innere Kettenführungsplatte (2), eine äußere Kettenführungsplatte (3) sowie ein zwischen diesen gebildeter Zwischenraum (4) erkennbar. Eine nicht dargestellte Rollenkette, die in montiertem Zustand am Fahrrad einen geschlossenen Ring bildet, läuft durch den Zwischenraum (4).

Eine erste Bolzenlochung (8) und eine zweite Bolzenlochung (9) dienen jeweils zur Aufnahme von den in dieser Figur nicht dargestellten Schwenkbolzen, die ein Drehgelenk zwischen Armen von einem üblicherweise am Kettenführungselement (1) angeordneten Parallelogramm-Mechanismus und dem Kettenführungselement (1) bilden, damit das Kettenführungselement (1) relativ zum Fahrradrahmen und damit auch relativ zu den Kettenrädern am Tretlager bewegt werden kann. Diese Relativbewegung des Kettenführungselementes (1) dient dem Umlegen der Kette von einem Kettenblatt auf das benachbarte Kettenblatt.

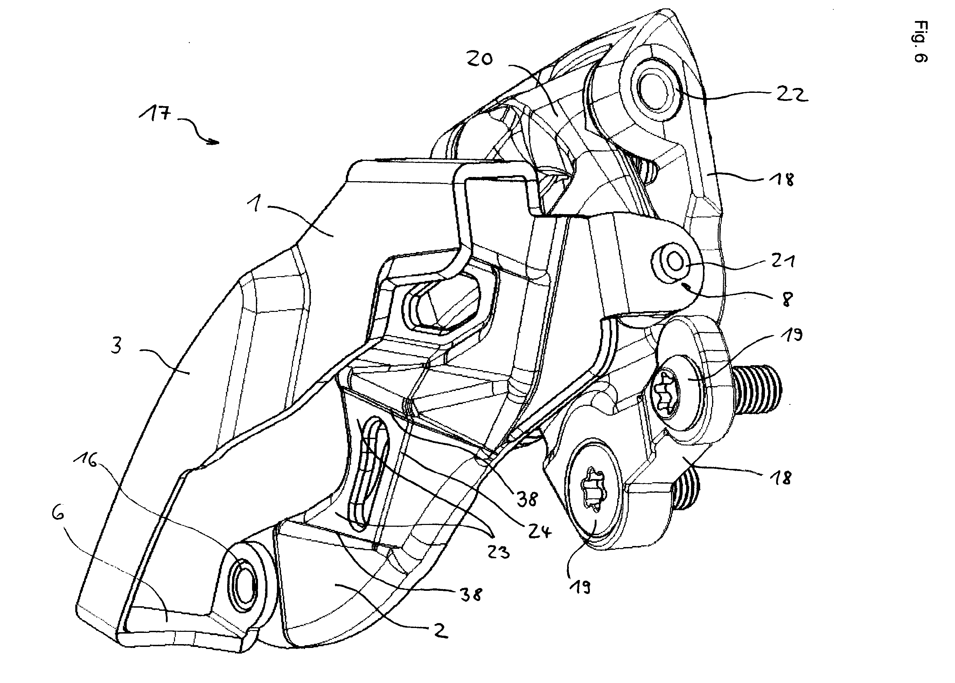

Ein kompletter Kettenumwerfer (17) ist in Figur 6 in einer perspektivischen Darstellung gezeigt. Es handelt sich dabei um eine Ausführungsform von einem Kettenumwerfer, bei der ein Basisteil (18) mittels Befestigungsschrauben (19) nicht beweglich mit dem Sitzrohr des nicht dargestellten Fahrradrahmens verbunden ist. Alternative Bauformen von Kettenumwerfern verfügen über eine Klemmschelle, die mit dem Basisteil verbunden ist, und der Montage am Sitzrohr des Fahrradrahmens dient.

Das Kettenführungselement (1) ist mittels eines zum Parallelogramm-Mechanismus gehörenden Armes (20) sowie eines Zugarmes (35) beweglich mit dem Basisteil (18) verbunden. Am verdeckten und somit nicht sichtbaren Zugarm (35) ist eine Seilklemmschraube (36) angeordnet.

Sowohl der Arm (20), als auch der Zugarm (35) sind mittels Gelenkbolzen (22) beweglich verbunden mit dem Basisteil (18), und mittels Schwenkbolzen (21) mit dem Kettenführungselement (1). Die ersten Bolzenlochungen (8) und die nicht dargestellten zweiten Bolzenlochungen (9) zur Aufnahme der Schwenkbolzen (21) sind nicht wie bei der Ausführungsform nach den Figuren 1 bis 5 oberhalb des Kettenführungselementes (1) angeordnet, sondern seitlich vom Kettenführungselement (1).

Die räumliche Anordnung des Kettenführungselements (1) kann grundsätzlich oberhalb oder unterhalb des Basisteils (18) sein, jeweils mit der Erstreckung des Arms (20) und des Zugarms (35) nach oben oder nach unten, ausgehend vom Basisteil (18). In der Ausführungsform gemäß Figur 6 erstreckt sich der Arm (20) nach unten, ausgehend vom Basisteil (18).

Die innere Kettenführungsplatte (2) und die äußere Kettenführungsplatte (3) sind so gestaltet, dass sie bei der Schaltbewegung nicht mit den Kettenrädern kollidieren.

In den Figuren 1 bis 3 sind weitere Detailmerkmale des Kettenführungselements (1) erkennbar. Eine notwendige mechanische Verbindung zwischen der inneren Kettenführungsplatte (2) und der äußeren Kettenführungsplatte (3) stellen ein oberer Distanzsteg (5) und ein hinterer Distanzsteg (6) her, wobei der hintere Distanzsteg (6) außerdem verhindert, dass die Kette aus dem Zwischenraum (4) herausrutscht. Die hintere Stegbefestigung (10) zwischen hinterem Distanzsteg (6) und innerer Kettenführungsplatte (2) ist unter Einbeziehung eines Stegniets (16) gebildet. Zum Zweck des Einfügens einer in einem geschlossenen Ring vorliegenden Kette ist alternativ die hintere Stegbefestigung (10) zwischen hinterem Distanzsteg (6) und innerer Kettenführungsplatte (2) mit Nutzung einer Schraube gebildet.

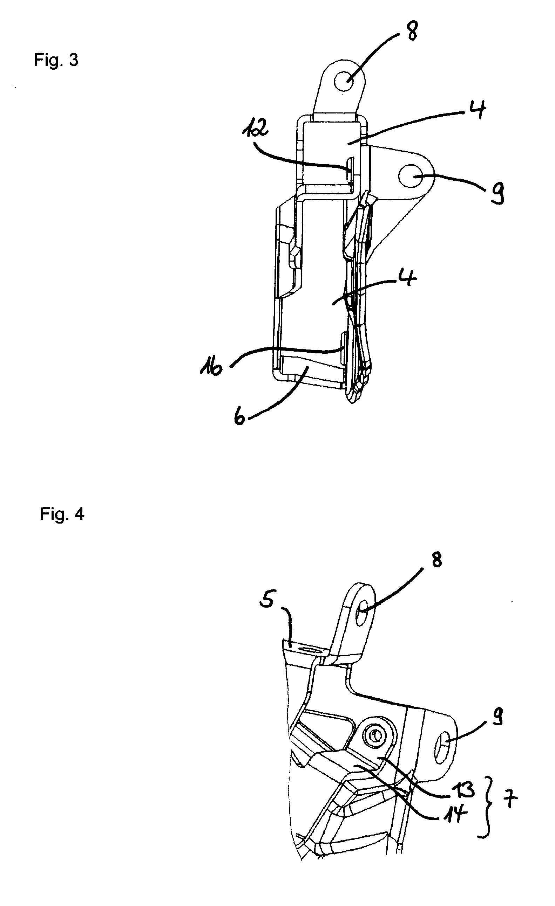

Eine weitere Verbindung zwischen der inneren Kettenführungsplatte (2) und der äußeren Kettenführungsplatte (3) stellt eine vordere Plattenverbindung (7) her. Dabei erstreckt sich ein Distanzstück (14) zwischen der inneren Kettenführungsplatte (2) und der äußeren Kettenführungsplatte (3), und eine Verbindungslasche (13) liegt auf der inneren Kettenführungsplatte (2) auf. Ein Niet (12) verbindet die Verbindungslasche (13) und die innere Kettenführungsplatte (2) unlösbar und stabilisiert die Kettenführungsplatten (2, 3) zueinander. Durch die gewählte Z-förmige Anordnung von äußerer Kettenführungsplatte (3), Distanzstück (14) und Verbindungslasche (13), wie in den Figuren 1 und 3 ersichtlich, ergeben sich mehrere Effekte.

Der Niet (12) ist für Werkzeuge, die beim Vernieten benutzt werden müssen, leicht zugänglich. Außerdem weist die äußere Kettenführungsplatte (3) eine größere Stabilität in Hinsicht auf ein Abbiegen gegenüber der inneren Kettenführungsplatte (2) auf, als eine Anordnung einer anderen vorderen Plattenverbindung (7), die eine U-Form aufweist und um die Kante der inneren Kettenführungsplatte (2) herumgreift. Das ergibt sich aus dem größeren Abstand zwischen dem oberen Distanzsteg (5) und der vorderen Plattenverbindung (7) bei dem erfindungsgemäßen Kettenführungselement (1).

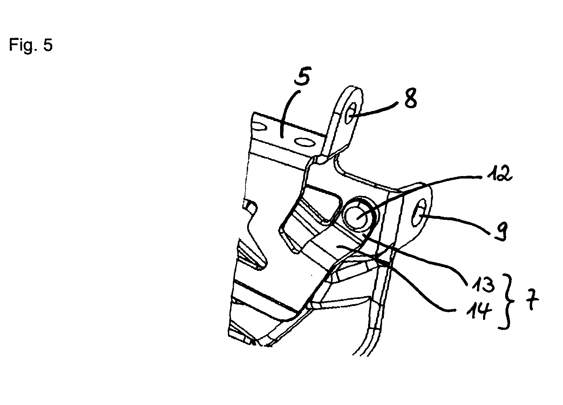

Das Distanzstück (14), wie in den Detailansichten der Figuren 4 und 5 erkennbar, kann bei der erfindungsgemäßen Ausführung auch noch genutzt werden als Begrenzungselement gegen das zu weite Anheben der Kette beim Umschaltvorgang, wenn diese beim Umlegvorgang nach radial außen über die Verzahnung am größten Kettenblatt steigt. Damit die Kette zwar geführt wird, aber nicht zwischen Zähnen am Kettenrad und vorderer Plattenverbindung (7) eingeklemmt wird, neigt sich das Distanzstück (14) entlang seiner Erstreckung in der Richtung vom oberen Distanzsteg (5) zur vorderen Plattenverbindung (7) nach unten.

Der in Figur 5 gezeigte Niet (12) ist aus Vollmaterial hergestellt. Stattdessen kann auch ein Hohlniet eingesetzt werden.

An Stelle des Niets (12) kann auch eine Schraube eingesetzt werden, zum Beispiel wenn besondere Anforderungen hinsichtlich Zugänglichkeit, Wartungsmöglichkeiten und Austausch von Bestandteilen bestehen.

Erste und zweite Bolzenlochung (8, 9) können in anderen Ausführungsformen der Erfindung anders zueinander positioniert sein, was im Zusammenhang mit der Richtung der Erstreckung der Arme des Parallelogramm-Mechanismus steht. Im gezeigten Ausführungsbeispiel ist die erste Bolzenlochung (8) an einer höheren Position als die zweite Bolzenlochung (9). Das könnte auch umgekehrt sein, oder beide Bolzenlochungen können auf demselben Höhen-Niveau angeordnet sein.

In den Figuren 1 und 2 ist oberhalb und rechts vom hinteren Distanzsteg (6) und dem Stegniet (16), jeweils oberhalb des Endes der Bezuglinien zum Bezugszeichen "2", ein Abschnitt der inneren Kettenführungsplatte (2) zu erkennen, der einen Kanal bildet. Dieser Kanal beginnt an der oberen Außenkante der inneren Kettenführungsplatte (2), verengt sich in der bildlichen Darstellung in seinem Verlauf von links nach rechts und endet an einer Linie, die von links unten nach rechts oben verläuft. Diese Linie stellt eine Erhebung dar. Da der Kanal hin zum Zwischenraum (4) des Kettenführungselements (1) weist, kann er mit der sich durch den Zwischenraum erstreckenden Rollenkette in Kontakt kommen. Der Kanal (23) und die Erhebung (24) sind auch in Figur 6 erkennbar.

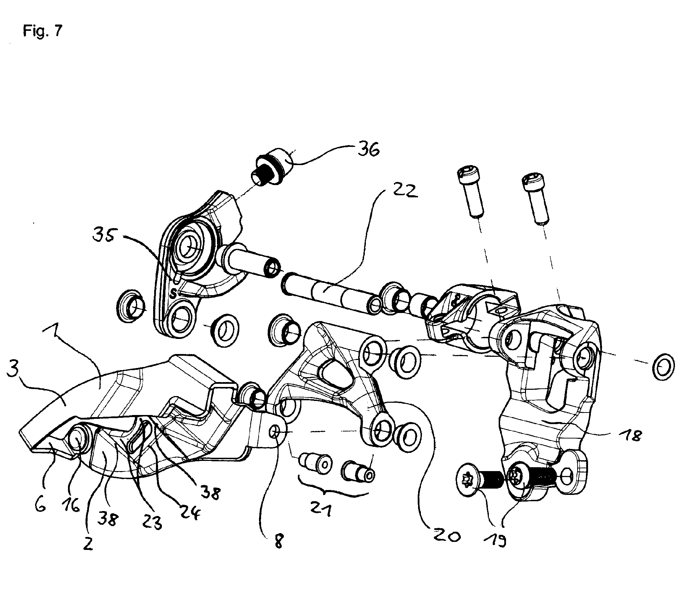

In der Explosionsdarstellung in Figur 7 sind das Basisteil (18), der Arm (20), der Zugarm (35), das Kettenführungselement (1), der Schwenkbolzen (21) und der Gelenkbolzen (22) als die wesentlichen Elemente des Kettenumwerfers (17) erkennbar. Das Kettenführungselement (1) weist den Kanal (23) mit der Erhebung (24) auf.

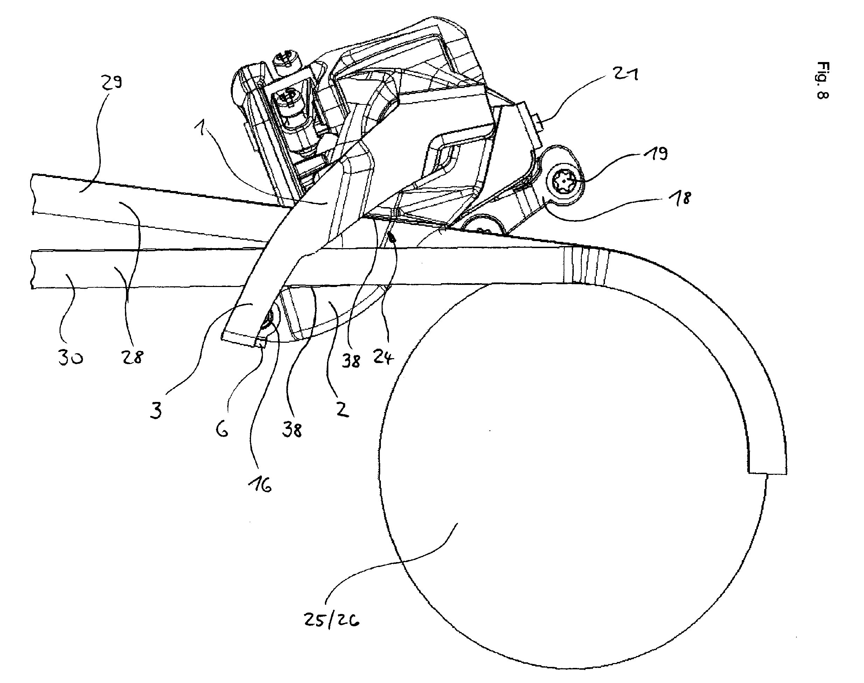

Die Figur 8 zeigt die erfindungsgemäße Einrichtung zum Umlegen der Rollenkette (28) an einem vorderen Kettenrad (25) für ein Fahrrad bei Betrachtung parallel zur Tretlagerachse von der rechten Seite des Fahrrades aus. Es sind die Verhältnisse gezeigt, wie Abschnitte der Rollenkette (28) den hohen Zugtrum (29) oder alternativ den niedrigen Zugtrum (30) bilden. Dabei stellt der hohe Zugtrum (29) die Verbindung zwischen dem kleineren Kettenrad (26) und einem nicht dargestellten größten Ritzel des Ritzelsatzes am Hinterrad her. Der niedrige Zugtrum (30) stellt weiterhin die Verbindung zwischen demselben kleineren Kettenrad (26) und einem ebenfalls nicht dargestellten kleinsten Ritzel des Ritzelsatzes am Hinterrad her.

Das vordere Kettenrad (25) und die Rollenkette (28) sind nur schematisch dargestellt. Der Kreis, der das vordere Kettenrad (25) veranschaulicht, ist ein Kreis durch die Achsen der nicht dargestellten Kettenbolzen der Rollenkette (28), die am Kettenrad in Eingriff ist. Das die Rollenkette (28) darstellende Band ist eine kreisförmige Hüllkurve um die Glieder der Rollenkette.

Hinter dem hohen Zugtrum (29) und dem niedrigen Zugtrum (30) befindet sich in der Darstellung der Kanal (23) an der inneren Kettenführungsplatte (2), dessen Ränder (38) entsprechend der Winkelstellung von hohem Zugtrum (29) und niedrigem Zugtrum (30) in Kettenlaufrichtung trichterförmig zusammenlaufen. Die Erhebung (24) verläuft geradlinig zwischen den Rändern (38) des Kanals. Ein anderer Verlauf der Erhebung wäre bei einer anderen Ausführungsform auch denkbar. Es kommt lediglich darauf an, dass die Erhebung (24) in Kontakt mit der Rollenkette (28) kommen kann, wenn sich Glieder der Rollenketten (28) im Kanal (23) befinden.

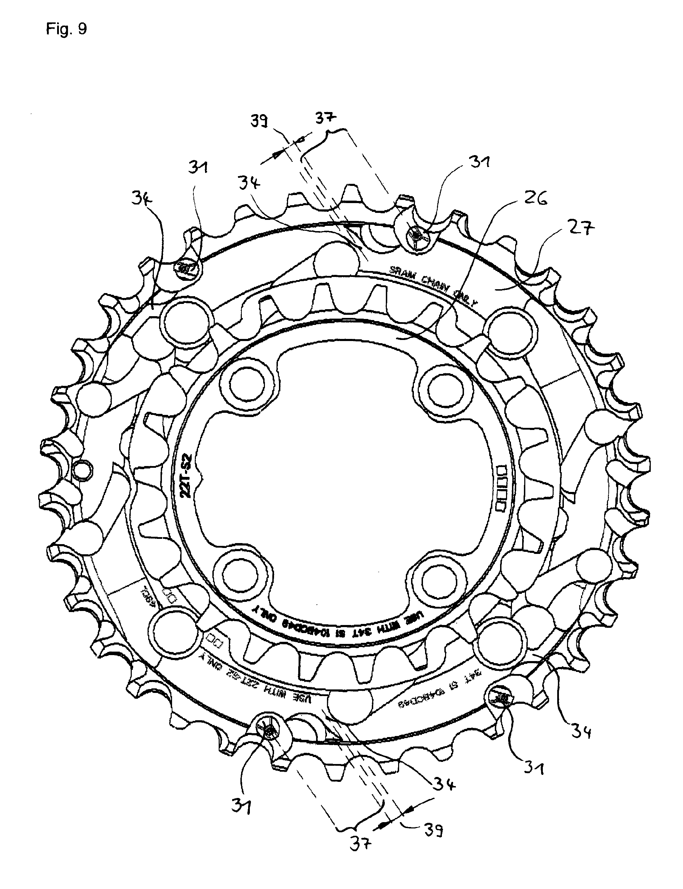

Figur 9 zeigt das kleinere Kettenrad (26) der erfindungsgemäßen Einrichtung zum Umlegen der Rollenkette (28) sowie das benachbarte größere Kettenrad (27), betrachtet achsparallel zur nicht dargestellten Drehachse der Kettenräder (26, 27), von der linken Seite des Fahrrades beziehungsweise von der Seite des kleineren Kettenrades (26) aus. Die Positionen der Kettenräder (26, 27) sind entsprechend ihrer Einbaulage an der Tretkurbel, aber ohne dass die dazu notwendigen Befestigungsmittel mit gezeigt sind.

An der Seite des größeren Kettenrades (27), das dem kleineren Kettenrad (26) zugewandt ist, sind mehrere Kettensteigniete (31) vorhanden, die in Umfangsrichtung voneinander beabstandet sind.

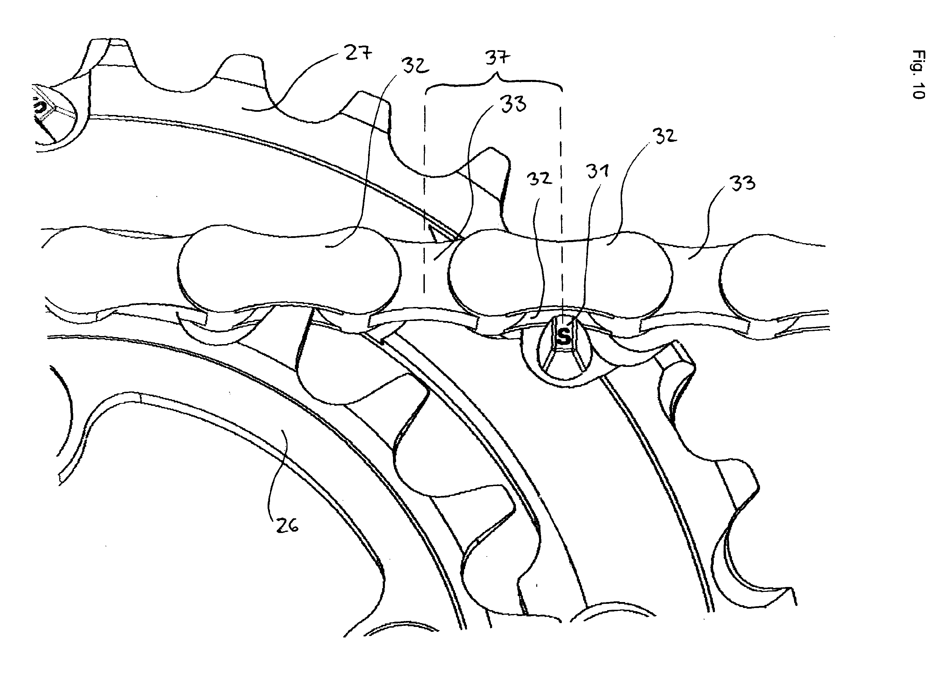

Figur 10 zeigt die Situation zum Zeitpunkt am Beginn des Kettenumlegens an einer erfindungsgemäßen Einrichtung zum Umlegen der Rollenkette (28), betrachtet von der Seite des kleineren Kettenrades (26) aus. Da die Blickrichtung leicht nach oben geht, sind die Paare von Außenlaschen (32) der Außenlaschenglieder der Rollenkette (28) zu erkennen. Bei der Darstellung der Innenlaschenglieder (33) ist auf die Details der ebenfalls paarweise angeordneten Innenlaschen verzichtet worden.

Es ist zu erkennen, dass das hakenförmige Ende eines Kettensteigniets (31) in den Raum zwischen den Außenlaschen (32) eingreift und bei der weiteren gemeinsamen Drehbewegung der Kettenräder (26, 27) das betroffene Kettenglied mitnimmt, wodurch es zu einem Abknicken der Rollenkette (28) kommen wird. Eine Grundvoraussetzung für dieses Eingreifen ist, dass der Abstand zwischen einem Zahn am tangentialen Ablauf der Kette vom kleineren Kettenrad (26) im Zustand des beginnenden Umlegens der Rollenkette (28) auf das benachbarte größere Kettenrad (27) einerseits, und dem Kettensteigniet (31) andererseits, einem ganzzahligen Vielfachen der Kettenteilung (37) entspricht.

Die Position der nicht dargestellten Erhebung (24) im Kanal (23) an der inneren Kettenführungsplatte (2) entspricht dabei der Lasche der Kette, die am Kettensteigniet (31) anliegt.

Damit die Glieder der Rollenkette (28) beim Umlegen der Rollenkette (28) im Kanal (23) aufgenommen werden können, müssen die Ränder (38) des Kanals (23) außerhalb eines Bereiches angeordnet werden, der einerseits vorgegeben wird vom hohen Zugtrum (29), wenn nämlich die Rollenkette (28) vom kleineren Kettenrad (26) hin zum größten hinteren Ritzel am Hinterrad verläuft, und der andererseits vorgegeben wird vom niedrigen Zugtrum (30), wenn die Rollenkette (28) vom kleineren Kettenrad (26) hin zum kleinsten hinteren Ritzel am Hinterrad verläuft.

Infolge der bevorzugten Positionierung der Glieder der Rollenkette (28) während des Vorganges des Kettenumlegens im Kanal (23) des Kettenführungselements (1) ergibt sich ein Zuführen der Rollenkette (28) hin zum Kettensteigniet (31). Es wird bewirkt, dass ein Kettensteigniet (31) in den Raum zwischen einem Paar von Außenlaschen (32) eingreift.

Durch das Wirken von Kanal (23) mit der Erhebung (24) am Kettenführungselement (1) werden Glieder der Rollenkette (28) hin zum Kettensteigniet (31) gedrückt. Unterstützt wird diese Maßnahme durch Elemente zum Unterstützen des Umlegens der Rollenkette (28), die am größeren Kettenrad (27) vorgesehen sind.

An dem größeren Kettenrad (27) befindet sich in Betrachtungsrichtung hinter dem Innenlaschenglied (33) der Rollenkette (28) zusätzlich noch eine Selektionsrippe (34), die in den Raum zwischen den Enden der sich in Kettenlaufrichtung gegenüberstehenden Außenlaschen (32) hineinragt. Dazu ist die Breite (39) der Selektionsrippe (34) entsprechend klein zu wählen. Damit kann sich die Rollenkette (28) maximal in axialer Richtung an das größere Kettenrad (27) annähern, wodurch es zum genannten Eingriff der Außenlasche (32) der Rollenkette (28) am Kettensteigniet (31) am größeren Kettenrad (27) kommen kann. Für die Funktion dieses Prinzips ist erforderlich, dass der Abstand in Kettenlaufrichtung zwischen der Selektionsrippe (34) und dem Kettensteigniet (31) einem ungeradzahligen Vielfachen der Kettenteilung entspricht. Dadurch wird gewährleistet, dass bei der Zuordnung eines Innenlaschengliedes (33) an der Selektionsrippe (34) am Kettensteigniet (31) eine Außenlasche (32) anliegt.

Im dargestellten Beispiel beträgt der Abstand zwischen der Selektionsrippe (34) und dem Kettensteigniet (31) der einfachen Kettenteilung (37).

Beim gezeigten Ausführungsbeispiel ist die Selektionsrippe (34) dadurch gebildet, dass in Kettenlaufrichtung benachbartes Material abgearbeitet ist. Eine Selektionsrippe könnte auch gebildet werden durch Herauspressen von Material, Auftragen von Material oder Aufnieten eines gesonderten Elementes.

Im alternativen Fall, wenn nämlich eine Außenlasche (32) axial neben der Selektionsrippe (34) zu liegen kommt, wird ein Eingriff der Rollenkette (28) am Kettensteigniet (31) verhindert.

Im dargestellten Ausführungsbeispiel der Erfindung verfügt das kleinere Kettenrad (26) über 22 Zähne und das größere Kettenrad (27) über 34 Zähne. Eine Abstufung von 24 Zähnen am kleineren Kettenrad (26) und 36 Zähnen am größeren Kettenrad (27) hat sich auch als praktisch erwiesen.

Zusätzlich zum kleineren Kettenrad (26) und zum größeren Kettenrad (27) kann noch ein nicht dargestelltes kleinstes Kettenrad (40) vorhanden sein, mit einer noch kleineren Zähnezahl als beim kleineren Kettenrad (26).

### Bezugszeichenliste

| | | | |
|---|---|---|---|
| 1 | Kettenführungselement | 22 | Gelenkbolzen |
| 2 | innere Kettenführungsplatte | 23 | Kanal |
| 3 | äußere Kettenführungsplatte | 24 | Erhebung |
| 4 | Zwischenraum | 25 | vorderes Kettenrad |
| 5 | oberer Distanzsteg | 26 | kleineres Kettenrad |
| 6 | hinterer Distanzsteg | 27 | größeres Kettenrad |
| 7 | vordere Plattenverbindung | 28 | Rollenkette |
| 8 | erste Bolzenlochung | 29 | hoher Zugtrum |
| 9 | zweite Bolzenlochung | 30 | niedriger Zugtrum |
| 10 | hintere Stegbefestigung | 31 | Kettensteigniet |
| 12 | Niet | 32 | Außenlasche |
| 13 | Verbindungslasche | 33 | Innenlaschenglied |
| 14 | Distanzstück | 34 | Selektionsrippe |
| 16 | Stegniet | 35 | Zugarm |
| 17 | Kettenumwerfer | 36 | Seilklemmschraube |
| 18 | Basisteil | 37 | Kettenteilung |
| 19 | Befestigungsschraube | 38 | Ränder |
| 20 | Arm | 39 | Breite |
| 21 | Schwenkbolzen | 40 | kleinstes Kettenrad |

## Patentansprüche

1. Einrichtung zum Umlegen einer Rollenkette (28) an einem vorderen Kettenrad (25) für ein Fahrrad,
umfassend ein kleineres Kettenrad (26), ein größeres Kettenrad (27), eine Rollenkette (28) sowie einen Kettenumwerfer (17) mit einem Kanal (23) an einer inneren Kettenführungsplatte (2);
**gekennzeichnet dadurch**
**dass** der Kanal (23) eine Erhebung (24) aufweist, die zum Zeitpunkt des beginnenden Eingriffs eines Kettensteigniets (31) am größeren Kettenrad (27) in den Raum zwischen einem Paar von Außenlaschen (32) der Rollenkette (28) im Zustand des beginnenden Umlegens der Rollenkette (28) vom kleineren Kettenrad (26) auf das benachbarte größere Kettenrad (27) zur Deckung kommt mit dem Kettensteigniet (31), bei Betrachtung in einer Richtung parallel zur Drehachse der Kettenräder (26, 27).

2. Einrichtung zum Umlegen einer Rollenkette (28) nach Anspruch 1,
**dadurch gekennzeichnet,**
**dass** der in einer Richtung parallel zur Längserstreckung der Rollenkette (28) im Zeitpunkt des beginnenden Umlegens der Rollenkette (28) auf das benachbarte größere Kettenrad (27) bestimmte Abstand zwischen einer Selektionsrippe (34) und
dem Kettensteigniet (31) einem ungeradzahligen Vielfachen der Kettenteilung (37) entspricht.

3. Einrichtung zum Umlegen einer Rollenkette (28) nach Anspruch 2 **dadurch gekennzeichnet,**
**dass** der Abstand zwischen der Selektionsrippe (34) und dem Kettensteigniet (31) der einfachen Kettenteilung entspricht.

4. Einrichtung zum Umlegen einer Rollenkette (28) nach Anspruch 1 oder 2
**dadurch gekennzeichnet,**
**dass** das kleinere Kettenrad (26) 22 Zähne und das größere Kettenrad (27) 34 Zähne aufweist.

5. Einrichtung zum Umlegen einer Rollenkette (28) nach Anspruch 1 oder 2
**dadurch gekennzeichnet,**
**dass** das kleinere Kettenrad (26) 24 Zähne und das größere Kettenrad (27) 36 Zähne aufweist.

6. Einrichtung zum Umlegen einer Rollenkette (28) nach Anspruch 1 oder 2,
**dadurch gekennzeichnet,**
**dass** die Einrichtung ein weiteres vorderes Kettenrad (25) enthält, das noch kleiner ist als das kleinere Kettenrad (26) und somit des kleinste Kettenrad (40) darstellt.

7. Einrichtung zum Umlegen einer Rollenkette (28) nach Anspruch 1 oder 2,
**dadurch gekennzeichnet,**
**dass** der Abstand zwischen einem Zahn am tangentialen Ablauf der Kette vom kleineren Kettenrad (26) im Zustand des beginnenden Umlegens der Rollenkette (28) auf das benachbarte größere Kettenrad (27) einerseits und dem Kettensteigniet (31) einem ganzzahligen Vielfachen der Kettenteilung (37) entspricht.

8. Einrichtung zum Umlegen einer Rollenkette (28) nach Anspruch 1 oder 2,
**dadurch gekennzeichnet,**
**dass** sich Ränder (38) des Kanals (23) aus der Position des hohen Zugtrums (29) und des niedrigen Zugtrums (30) ergeben.

9. Einrichtung zum Umlegen einer Rollenkette (28) nach Anspruch 2 oder 3,
**dadurch gekennzeichnet,**
**dass** die Selektionsrippe (34) eine Breite (39) hat, die kleiner ist, als der Abstand zwischen zwei in Längsrichtung der Rollenkette (28) benachbarten Außenlaschen (32) der Rollenkette (28).
